# EUROPÄISCHE PATENTSCHRIFT

(11) **EP 0 795 779 B1**
(45) Veröffentlichungstag und Bekanntmachung des Hinweises auf die Patenterteilung: **13.08.2003**
(21) Anmeldenummer: 97250046.6
(22) Anmeldetag: 27.02.1997
(51) Int. Cl.: G03B 1/48, G03B 19/18

(54) **Laufbildkamera**
Motion picture camera
Caméra cinématographique

(30) Priorität: 04.03.1996 DE 19609414
(43) Veröffentlichungstag der Anmeldung: 17.09.1997
(73) Patentinhaber: ARNOLD & RICHTER CINE TECHNIK GMBH & CO. BETRIEBS KG, 80701 München (DE)
(72) Erfinder: Alscher, Edbert, 2345 Brunn a. Gebirge (AT); Kehrer, Klemens, 1150 Wien (AT)
(74) Vertreter: Ninnemann, Detlef, Dipl.-Ing.

(56) Entgegenhaltungen:
- EP-A- 0 454 283
- DE-B- 1 124 809
- US-A- 1 955 938
- US-A- 4 630 907

## Beschreibung

Die Erfindung bezieht sich auf eine Laufbildkamera mit einer rotierenden Spiegelblende.

Aus der DE 44 18 471 A1 ist eine Laufbild-Filmaufnahmekamera zur Belichtung eines Laufbildfilms bekannt, bei der der aus einer Filmkassette abgewickelte, unbelichtete Film mittels eines Filmtransportmechanismus an einem Bildfenster intermittierend vorbeibewegt wird, das in der Brennpunktebene eines Kameraobjektives angeordnet ist. Zwischen dem Kameraobjektiv und dem Bildfenster ist eine rotierende Spiegelblende vorgesehen, aus der ein Hellsektor ausgeschnitten ist und die wahlweise über ein Getriebe mit dem Filmtransportmechanismus verbunden ist oder von einem Blendenmotor angetrieben wird.

Während der Dauer des Filmtransports von einem zu belichtenden Filmbild zum nachfolgenden wird der Strahlengang vom Kameraobjektiv zum Bildfenster durch die Spiegelblende abgedeckt. Hat das nächste Filmbild die vorgegebene Stellung vor dem Bildfenster erreicht, wird der Strahlengang zur Belichtung des betreffenden Filmbildes durch den Hellsektor der Spiegelblende freigegeben. Durch eine verspiegelte Oberfläche der Spiegelblende kann der vom Kameraobjektiv ausgehende Strahlengang während des Filmtransports in ein Sucherokular, eine Videoausspiegelung oder dergleichen umgelenkt werden, so daß die Strahlenumlenkung während der Abdeckung des Bildfensters erfolgt. Die gegenüber der optischen Achse des Kameraobjektivs geneigte Spiegelblende ist hinsichtlich des Durchmessers und der Spiegelfläche so bemessen, daß zum einen das Bildfenster sowohl am oberen als auch am unteren Rand vollkommen überdeckt wird und zum anderen eine hinreichend lange Transportphase gewährleistet ist, in der der Laufbildfilm um eine Bildlänge transportiert werden kann.

Trotz einer entsprechenden Konstruktion der Spiegelblende kann nicht verhindert werden, daß insbesondere bei Langzeitaufnahmen vagabundierendes Licht in den Bereich des Bildfensters und damit auf den Laufbildfilm gelangt, so daß Fehlbelichtungen des Laufbildfilmes erfolgen.

Um derartige Fehlbelichtungen auszuschließen, ist es bekannt, bei Langzeitaufnahmen wie Einzelbildbelichtungen eine zusätzliche Abdeckblende (Capping Shutter) vor dem Kameraobjektiv vorzusehen, die zwischen den Einzelbildbelichtungen geschlossen wird und damit jedweden Strahleneintritt in das Kameraobjektiv und damit auf das Bildfenster bzw. den Laufbildfilm unterbindet. Eine derartige Abdeckblende kann beispielsweise aus einer Irisblende mit mehreren Lamellen bestehen, die mittels eines Hubmagneten bewegt werden. Erst unmittelbar vor dem Ende einer Dunkelphase bzw. Belichtungspause wird diese Abdeckblende mittels des Hubmagneten geöffnet und gibt den Strahlengang durch das Kameraobjektiv und bei entsprechender Stellung der Spiegelblende auf das Bildfenster frei.

Eine derartige Abdeckblende weist jedoch ein erhebliches Gewicht auf, das zudem wegen der Anordnung der Abdeckblende vor dem Kameraobjektiv an einer ungünstigen Stelle in bezug auf den Schwerpunkt der Laufbildkamera angeordnet ist. Die größeren und mechanisch bewegten Teile der Abdeckblende führen bei ihrer Betätigung zu einer Erschütterung während der Bildbelichtung, so daß die Gefahr von Unschärfen bei der Filmbelichtung besteht.

Darüber hinaus besteht für den Kameramann keine Möglichkeit, zwischen den Einzelbildaufnahmen eine Bildbetrachtung durch das Okular bzw. die Videoausspiegelung vorzunehmen, da die Abdeckblende den gesamten Strahlengang durch das Kameraobjektiv und damit die Umlenkung über die verspiegelte Oberfläche der Spiegelblende abdeckt.

Weiterhin ist eine derartige Abdeckblende aufwendig und damit teuer.

Aus der DE-AS 1 124 809 ist eine Kinokamera mit einem Kameraantrieb, einer Filmfortschalteinrichtung, einer Blendensektorscheibe und einem das Bildfenster abdeckenden bzw. das Bildfenster freigebenden Abdeckelement bekannt. Bei einer Freigabe des Kameraauslösers wird die Filmfortschaltung bei auslaufendem Kameraantrieb unterbunden und gleichzeitig das Abdeckelement vor das Bildfenster geschoben, um ein ruhiges Auslaufen des Motors und der vom Motor angetriebenen Blendensektorscheibe ohne störende Geräuschentwicklung bzw. Erschütterungen zu ermöglichen.

Bei dieser bekannten Kinokamera ist das Abdeckelement mechanisch mit dem Kamerauslöser gekoppelt, so daß eine Abdeckung des Bildfensters nur aber auch stets bei Freigabe des Kameraauslösers, nicht aber unabhängig von der Betätigung des Kameraauslösers erfolgt. Durch die Integration des Abdeckelements in den Filmtransportmechanismus und durch den Fortfall einer mechanischen Blockiervorrichtung ist die Anordnung des Abdeckelements zwingend zur Vermeidung von Fehlbelichtungen und die nachträgliche Ausrüstung sowie der wahlweise Einsatz des Abdeckelements nicht möglich.

Aus dem DE-GM 1 928 857 ist ein photographischer Verschluß für Reihenaufnahmen mit ultrakurzen Belichtungszeiten bekannt, bei dem mehrere im Strahlengang einer Kamera angeordnete, motorisch angetriebene Spiegelblenden vorgesehen sind, deren Frequenz und Stellung zueinander durch die sie jeweils antreibenden, mittels untereinander gekoppelter Frequenzwandler einstellbarer Motoren bestimmt wird.

Damit während der Anlaufphase keine Fehlaufnahmen mit unrichtiger Aufnahmefrequenz entstehen können, ist eine in Ruhelage die Bildöffnung abdeckende Klappe vorgesehen die mittels eines Elektromagneten aus dem Strahlengang bewegt wird. Eine vom Betrieb der rotierenden Spiegelblenden unabhängige Steuerung der Abdeckklappe ist jedoch nicht vorgesehen, so daß beispielsweise die Abdeckklappe die Bildöffnung während eines Aufnahmezyklus zwischen zwei aufeinanderfolgenden Aufnahmen - wie bei Einzelbildaufnahmen mit langen Dunkelphasen bzw. Belichtungspausen üblich und erwünscht - nicht abdeckt.

Beide Ausführungsformen verfügen über keine spezielle Führung im Bereich des Bildfensters, so daß auch bei geschlossener Verschlußblende kein absolut lichtdichter Verschluß gewärleistet wird, da weiterhin vagabundierendes Licht seitlich an den jeweiligen Verschlußblenden vorbei in den Bereich des entsprechenden Bildfensters und damit auf den Laufbildfilm gelangen kann.

Aus der EP-A-454 283 ist ein Bildfenster für Laufbildkameras bekannt, in das eine rahmenförmige Bildformatmaske einschiebbar ist, deren Bildausschnitt kleiner als der Bildfensterausschnitt ist, deren Rahmen gegenüber der Filmgleitfläche des Bildfensters vertieft angeordnet ist. An die Bildformatmaske ist ein rahmenförmiger Filterhalter zur Aufnahme eines Filters ansetzbar oder ansteckbar. Die Bildformatmaske wird durch einen in einer Seitenwand des Bildfensters vorgesehenen Schlitz eingeführt und durch obere und untere Führungskanäle geführt und von einem Führungskanal aufgenommen, der in einer dem Schlitz gegenüberliegenden Seitenwand des Bildfensters angeordnet ist.

Aufgabe der vorliegenden Erfindung ist es, bei Einzelbildbelichtung bzw. Langzeitaufnahmen eine lichtdichte Abdeckung des Laufbildfilms mit einer zusätzlich zu einer rotierenden Spiegelblende angeordneten Verschlußblende zu schaffen, die unabhängig vom Filmtransportmechanismus steuerbar ist, die auch bei geschlossener Verschlußblende einen Blick durch den Kamerasucher gestattet, die günstig in Bezug auf den Kameraschwerpunkt und eine kompakte Gestaltung der Laufbildkamera angeordnet werden kann, die einfach handhabbar, einfach und kostengünstig herstellbar ist und bei Bedarf auch zusätzlich zu einer Bildformatmaske eingesetzt werden kann.

Diese Aufgabe wird erfindungsgemäß durch die Merkmale des Anspruchs 1 gelöst.

Die erfindungsgemäße Lösung gewährleistet eine lichtdichte Abdeckung des Laufbildfilms in den Dunkelphasen, insbesondere bei einer Einzelbildbelichtung. Die Verschlußblende ist unabhängig vom Filmtransportmechanismus steuerbar und gestattet auch im geschlossenen Zustand einen Blick durch den Kamerasucher. Durch die Anordnung der Verschlußblende im Kamerakörper erfolgt keine Schwerpunktverlagerung der Laufbildkamera, so daß eine einfache und kompakte Konstruktion der Kamera und einfache Bedienbarkeit auch bei Einzelbildbelichtungen eines Laufbildfilmes gewährleistet ist. Dabei ist eine Bildbetrachtung durch das Sucherokular oder über eine Videoausspiegelung und das Kameraobjektiv auch in der geschlossenen Stellung der Verschlußblende gewährleistet, so daß der Kameramann alle erforderlichen Einstellungen auch in den Dunkelphasen bzw. Belichtungspausen durchführen kann.

Die Verbindung des Blendenantriebs mit der Steuerelektronik der Laufbildkamera bindet die Betätigung der Verschlußblende in die Elektronik der Laufbildkamera ein und ermöglicht somit beispielsweise programmierte Steuerungen, die wahlweise auch über ein getrenntes Steuergerät (Laptop-Camera-Controller) erfolgen kann.

Eine vorteilhafte Ausgestaltung der erfindungsgemäßen Lösung ist dadurch gekennzeichnet, dass die Blendenführungseinrichtung aus einem in einer Seitenwand des Bildfensters vorgesehenen trichterförmiger Schlitz, einem oberen und unteren Führungskanal zur Führung der Verschlußblende und einem in einer dem trichterförmigen Schlitz gegenüberliegenden Seitenwand des Bildfensters angeordnetem weiteren Schlitz zur Endlagenführung der Verschlußblende besteht.

Durch die nach einem weiteren Merkmal der Erfindung flexible Ausbildung der Verschlußblende in Verschieberichtung werden zum einen minimale bewegte Massen und zum anderen ein hohes Maß an Flexibilität sowie eine geringe Baugröße gewährleistet, so daß die Verschlußblende keine wesentliche Gewichtserhöhung sowie Vergrößerung der äußeren Abmessungen der Laufbildkamera verursacht.

Eine weiter vorteilhafte Ausgestaltung der erfindungsgemäßen Lösung ist dadurch gekennzeichnet, daß die Verschlußblende um eine Trommel gelegt ist, die mit einer Antriebseinrichtung verbunden ist, die vorzugsweise in einer die Innenkamera der Laufbildkamera verschließenden Kameratür angeordnet und von der Steuerelektronik der Laufbildkamera ansteuerbar ist.

Die Anordnung der Verschlußblende mit ihrem Antrieb in einer modifizierten Kameratür ermöglicht einen leichten Austausch der Verschlußblende.

Anhand eines in der Zeichnung dargestellten Ausführungsbeispieles soll der der Erfindung zugrunde liegende Gedanke näher erläutert werden. Es zeigen:
- Fig. 1 -: eine Seitenansicht einer im Bereich des Bildfensters geschnittenen Laufbild-Filmaufnahmekamera mit einer rotierenden Spiegelblende;
- Fig. 2 -: eine Vorderansicht der Laufbildkamera gemäß Fig. 1 mit schematisch dargestellter Verschlußblende;
- Fig. 3 -: eine Draufsicht auf die Laufbild-Filmaufnahmekamera gem. den Fig. 1 und 2 mit schematischer Darstellung des Antriebsmechanismus der Verschlußblende und
- Fig. 4 -: eine vergrößerte, geschnittene Darstellung des Verschlußblendenmechanismus.

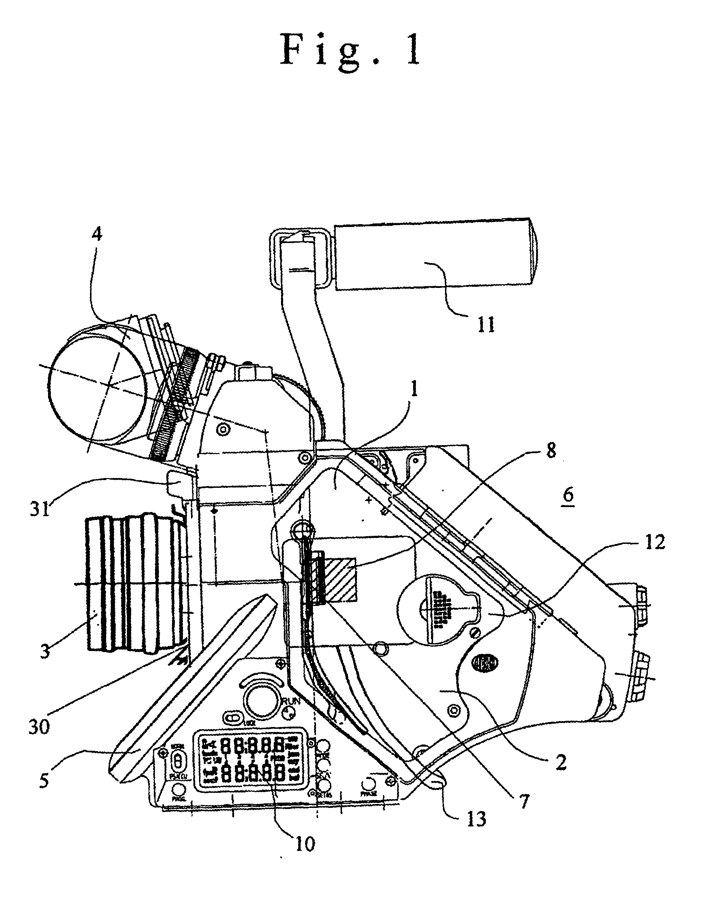

Die in Fig. 1 dargestellte Seitenansicht einer Laufbild-Filmaufnahmekamera zeigt das Kameragehäuse 1, das an einem Objektiv-Aufnahmeflansch 30 befestigte und mittels einer Entriegelungstaste 31 lösbare Kameraobjektiv 3, das schwenkbare Sucherokular 4 sowie eine nicht näher dargestellte Filmkassette 6, die an das Kameragehäuse 1 rückseitig anlenkbar ist. Der unbelichtete Laufbildfilm tritt durch eine Öffnung im Kameragehäuse 1 in die Laufbild-Filmaufnahmekamera ein und verläßt sie durch diese öffnung als belichteter Film zurück zur Filmkassette 6.

Die Zuführung des Films besteht aus einer oder mehreren Filmtransportrollen, die den Laufbildfilm kontinuierlich bewegen, während ein üblicherweise als Greiferschaltwerk ausgebildeter Filmtransportmechanismus 2 den Laufbildfilm intermittierend an einem Bildfenster 7 vorbeibewegt, das in der optischen Achse des Kameraobjektivs 3 angeordnet ist.

In der Transportphase des Filmtransportmechanismus 2 wird der Laufbildfilm durch eine rotierende Spiegelblende 5 abgedeckt und während der Belichtungsphase zur Belichtung freigegeben. Zum Ausgleich der kontinuierlichen Filmbewegung und der intermittierenden Filmbewegung bilden sich zu beiden Seiten des Bildfensters 7 Filmschlaufen aus.

Die Spiegelblende 5 wird von einem Blendenmotor angetrieben, der elektrisch mit dem Motor des Filmtransportmechanismus gekoppelt ist, so daß die Geschwindigkeiten beider Motoren synchron verlaufen. Alternativ kann eine unmittelbare mechanische Kopplung vorgesehen werden, bei der die Spiegelblende 5 über ein Getriebe mit dem Filmtransportmechanismus 2 verbunden ist.

Die Spiegelblende 5 setzt sich aus einer halbkreisförmigen Spiegelblende, einer Blendennabe sowie einer Blendenachse und im Falle eines Direktantriebs dem Blendenmotor zusammen. Die Oberfläche der Spiegelblende ist verspiegelt, so daß der vom Kameraobjektiv 3 ausgehende Strahlengang in das Sucherokular 4, eine nicht näher dargestellte Videoausspiegelung oder dergleichen umgelenkt wird. Diese Strahlenumlenkung erfolgt während der Abdeckung des Bildfensters 7, so daß während der Zeit der Abdeckung des Bildfensters 7 der Laufbildfilm transportiert werden kann und am Ende der Transportphase das nächste Filmbild vor dem Bildfenster 7 steht, wenn der Hellsektor der Spiegelblende das Bildfenster 7 freigibt.

Die gegenüber der optischen Achse des Kameraobjektivs 3 geneigte Spiegelblende 5 ist dabei hinsichtlich des Durchmessers und der Spiegelfläche, d.h. des Winkels des Dunkelsektors so zu bemessen, daß zum einen das Bildfenster 7 sowohl am oberen Rand als auch am unteren Rand vollkommen überdeckt wird und ein Transportwinkel gewährleistet ist, der von der Geschwindigkeit des Filmtransports, d.h. der Transportgeschwindigkeit des Filmschaltwerks abhängt. Durch eine zusätzlich angeordnete verstellbare Sektorblende kann die Abdeckzeit des Bildfensters 7 variiert werden.

Ein Bedienfeld 10 dient zur Einstellung verschiedener Filmtransportgeschwindigkeiten, Belichtungszeiten, Filmtransportprofile usw. Ein im Schwerpunktbereich der Laufbild-Filmaufnahmekamera angelenkter Handgriff 11 dient zum Transport der Laufbild-Filmaufnahmekamera.

Das Bildfenster 7 ist zusätzlich zur Spiegelblende 5 mittels einer senkrecht zur Transportrichtung des Laufbildfilms und zur optischen Achse des Kameraobjektivs 3 bewegliche Verschlußblende 8 verschließbar, so daß unabhängig von der Stellung der Spiegelblende 5 eine Belichtung des Laufbildfilmes verhindert wird. Bei geöffneter Verschlußblende 8 hängt die Belichtung des Laufbildfilmes wie vorstehend dargestellt von der Stellung der Spiegelblende 5 ab. Befindet sich die Verschlußblende 5 vor dem Bildfenster, d.h. in der "Geschlossen"-Stellung, so ist bei Ausschluß einer Filmbelichtung eine Bildbetrachtung durch das Sucherokular 4, die Spiegelblende 5 und das Kameraobjektiv 3 möglich, da sich die Verschlußblende 8 unmittelbar vor dem Laufbildfilm befindet.

Die Verschlußblende 8 und der Blendenantrieb sind vorzugsweise an der Kameratür 12 befestigt und die Verschlußblende 8 ist in Führungskanälen des Bildfensters 7 so geführt, daß sie mit geringem Abstand zum Laufbildfilm bewegt wird. Dabei kann ein Aufbau des Bildfensters analog zur Anordnung gemäß der EP 0 454 283 A2 vorgesehen sein.

Durch die Anordnung der Verschlußblende 8 mit ihrem Blendenantrieb in der Kameratür 12 ist ein leichter Austausch des Blendenantriebs und der Verschlußblende 8 gewährleistet und eine Kopplung des Blendenantriebs mit der Steuereinrichtung der Laufbild-Filmaufnahmekamera oder einen getrennten Camera-Controller über eine Kabelverbindung 13 gewährleistet.

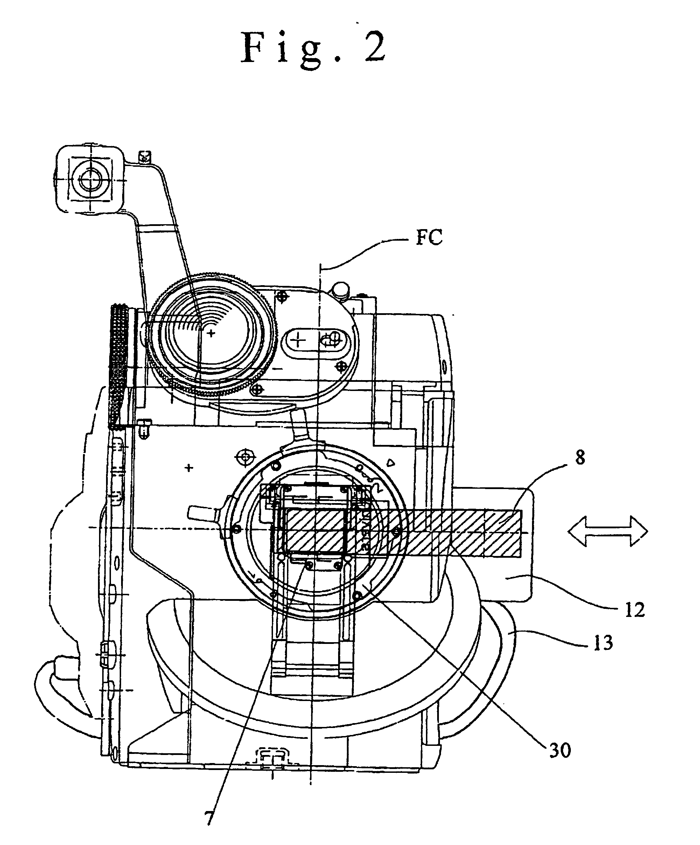

Die in Fig. 2 dargestellte Vorderansicht der Laufbild-Filmaufnahmekamera gemäß Fig. 1 zeigt den Objektiv-Aufnahmeflansch 30 mit dem dahinter angeordneten Bildfenster 7. Fig. 2 verdeutlicht die Bewegungsrichtung der Verschlußblende 8, die sowohl senkrecht zum Filmzentrum FC als auch senkrecht zur optischen Achse verläuft, die senkrecht durch die Blattebene hindurchläuft. In dem hier dargestellten Ausführungsbeispiel besteht die Verschlußblende 8 aus einem Federband, das von der Kameraseite in Richtung des in Fig. 2 eingetragenen Doppelpfeiles direkt in das Bildfenster 7 der Laufbild-Filmaufnahmekamera eingeschoben wird und so einen Lichteinfall auf das Filmbild während längerer Dunkelphasen bzw. Belichtungspausen z.B. bei einem Einzelbildbetrieb verhindert. Alternativ zu einem Federband ist die Anordnung einer mittels einer Zahnstange oder dergleichen bewegten ebenen Verschlußblende möglich.

Befestigt ist die Verschlußblende 8 an der Kameratür 12, an der auch der Blendenantrieb angeordnet ist. Dieser ist über das Kabel 13 mit der Steuereinrichtung der Laufbild-Filmaufnahmekamera bzw. mit einer Steckereinrichtung für einen getrennten Camera-Controller verbunden.

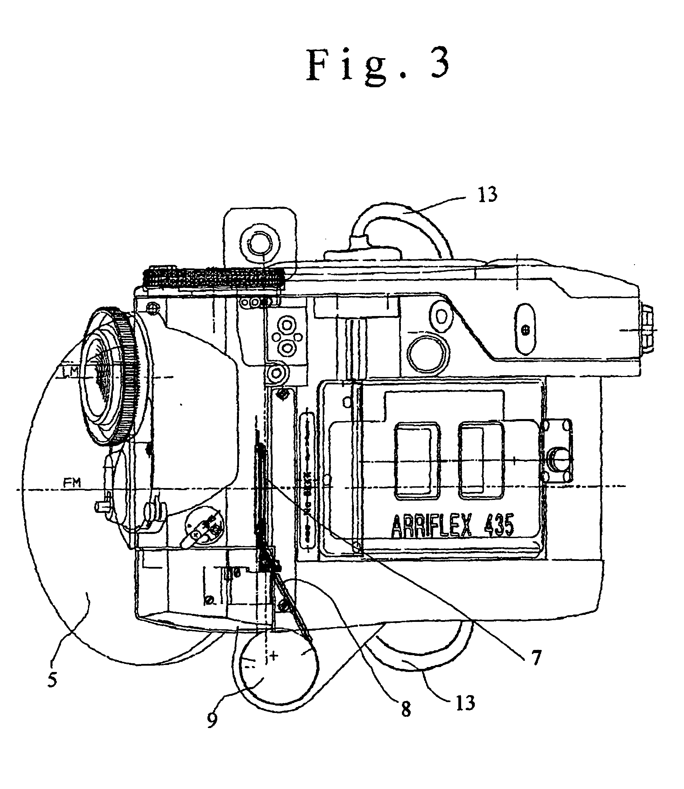

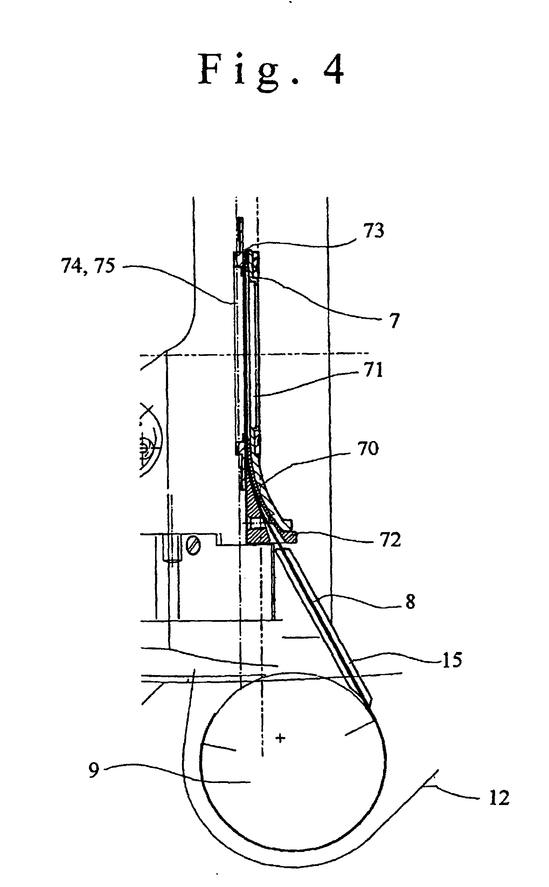

Fig. 3 verdeutlicht in einer Draufsicht auf die Laufbild-Filmaufnahmekamera die Anordnung der Verschlußblende 8 und des Blendenantriebs 9 in bezug auf das Bildfenster 7 und das Kameragehäuse 2, während in Fig. 4 die Führung der Verschlußblende 8 und der Blendenantrieb 9 vergrößert im Detail dargestellt sind.

In einer der Kameratür 12 zugewandten Seitenwand 70 des Bildfensters 7 ist ein trichterförmiger Schlitz 72 vorgesehen, durch den die als Federband ausgeführte Verschlußblende 8 in das Bildfenster 7 einführbar ist. Zur Führung der Verschlußblende 8 dienen obere und untere Führungskanäle 74, 75 sowie an der dem trichterförmigen Schlitz 72 gegenüberliegenden Seitenwand des Bildfensters 7 ein weiterer Schlitz 73 zur Endlagenführung der Verschlußblende 8. Eine Düse 15 dient der Zuführung der Verschlußblende 8 zum trichterförmigen Schlitz 72 vom Blendenantrieb 9 her, der eine trommelförmige Aufnahme zum Aufwickeln des Verschlußblenden-Federbandes 8 aufweist und in der auswechselbaren Kameratür 12 angeordnet ist.

## Patentansprüche

1. Laufbildkamera mit einem Kameraobjektiv (3), einem in der Filmbahn eines Laufbildfilmes angeordneten Bildfenster (7), an dem der Laufbildfilm mittels eines Filmtransportmechanismus (2) intermittierend vorbeibewegt wird, einer zwischen dem Kameraobjektiv (3) und dem Bildfenster (7) angeordneten, gegenüber der optischen Achse des Kameraobjektivs (3) geneigten, rotierenden Spiegelblende (5), die während des Filmtransports das Bildfenster (7) abdeckt und den Strahlengang in ein Sucherokular (4), eine Videoausspiegelung oder dergleichen umgelenkt und beim Stillstand des Laufbildfilms das Bildfenster (7) zur Belichtung des Laufbildfilms freigibt, und mit einer zusätzlichen, im Strahlengang hinter dem Kameraobjektiv (3) angeordneten Verschlußblende (8), die
- im wesentlichen senkrecht zur Filmtransportrichtung verschiebbar ist,
- in Verschieberichtung flexibel ausgebildet ist,
- in einer in das Bildfenster (7) integrierten Blendenführungseinrichtung (70 bis 75) geführt ist,
- mit einem von der Steuereinrichtung der Laufbildkamera oder einem von der Laufbildkamera getrennten Camera-Controller ansteuerbaren Blendenantrieb (9) verbunden ist und
- im geschlossenen Zustand vollständig in das Bildfenster (7) eingeführt ist.

2. Laufbildkamera nach Anspruch 1, **dadurch gekennzeichnet, daß** die Blendenführungseinrichtung (70 bis 75) aus einem in einer Seitenwand (70) des Bildfensters (7) vorgesehenen trichterförmiger Schlitz (72), einem oberen und unteren Führungskanal (74, 75) zur Führung der Verschlußblende (8) und einem in einer dem trichterförmigen Schlitz (72) gegenüberliegenden Seitenwand des Bildfensters (7) angeordnetem weiteren Schlitz (73) zur Endlagenführung der Verschlußblende (8) besteht.

3. Laufbildkamera nach Anspruch 2, **dadurch gekennzeichnet, dass** die Verschlußblende (8) aus einem in der Blendenführungseinrichtung (70 bis 75) geführten Federband besteht.

4. Laufbildkamera nach Anspruch 3, **dadurch gekennzeichnet, daß** das Federband der Verschlußblende (8) um eine Trommel (9) gelegt ist, die mit dem in einer die Innenkamera der Laufbildkamera verschließenden Kameratür (12) angeordneten Blendenantrieb verbunden ist.

## Claims

1. Motion picture camera with a camera lens (3), a film window (7) mounted in the film path of a moving film, past which the moving film is moved intermittently by means of a film transport mechanism (2), a rotating mirror aperture (5) mounted between the camera lens (3) and the film window (7) and inclined relative to the optical axis of the camera lens (3), whereby the mirror aperture covers the film window (7) during the film transport and deflects the beam path into a viewfinder eyepiece (4), a video reflector or the like and which when the moving film is stationary releases the film window (7) for exposure of the moving film, and with an additional shutter (8) mounted in the beam path behind the camera lens (3), which
- is displaceable substantially perpendicular to the film transport direction,
- is designed flexible in the displacement direction,
- is guided in an aperture guide device (70 to 75) integrated in the film window (7),
- is connected to an aperture drive (9) controllable by the control device of the motion picture camera or a camera controller separate from the motion picture camera,
- in the closed state is introduced fully into the film window (7).

2. Motion picture camera according to claim 1, **characterised in that** the aperture guide device (70 to 75) consists of a funnel-shaped slot (72) provided in a side wall (70) of the film window (7), an upper and lower guide channel (74, 75) for guiding the shutter (8) and a further slot (73) mounted in a side wall of the film window (7) opposite the funnel-shaped slot (72) for the end position guidance of the shutter (8).

3. Motion picture camera according to claim 2, **characterised in that** the shutter (8) consists of a spring strip guided in the aperture guide device (70 to 75).

4. Motion picture camera according to claim 3, **characterised in that** the spring strip of the shutter (8) is placed about a drum (9) which is connected to the aperture drive mounted in a camera door (12) which closes the inner camera of the motion picture camera.

## Revendications

1. Caméra cinématographique comportant un objectif (3), une fenêtre d'image (7), disposée dans la bande d'un film cinématographique et devant laquelle le film cinématographique se déplace de façon intermittente sous l'action d'un mécanisme (2) de déplacement du film, un diaphragme rotatif à miroir (5), qui est disposé entre l'objectif (3) de la caméra et la fenêtre d'image (7) et est incliné par rapport à l'axe optique de l'objectif (3) de la caméra et qui, pendant le déplacement du film, recouvre la fenêtre d'image (7) et fait dévier le trajet du faisceau dans un oculaire (4) de viseur, un dispositif à réflexion vidéo ou analogue et, lorsque le film cinématographique est arrêté, libère la fenêtre d'image (7) pour l'éclairement du film cinématographique et un diaphragme de fermeture supplémentaire (8) disposé dans le trajet du rayonnement derrière l'objectif (3) de la caméra, et qui,
- est déplaçable sensiblement perpendiculairement à la direction de déplacement du film,
- est agencé de manière à être souple dans la direction de déplacement,
- est guidé dans un dispositif (70 à 75) de guidage du diaphragme, qui est intégré dans la fenêtre d'image (7),
- est relié à un dispositif (9) d'entraînement du diaphragme, qui peut être commandé par le dispositif de commande de la caméra cinématographique ou par un contrôleur de la caméra séparé de la caméra cinématographique, et
- à l'état fermé, est complètement introduit dans la fenêtre d'image (7).

2. Caméra cinématographique selon la revendication 1, **caractérisée en ce que** le dispositif (70 à 75) de guidage du diaphragme est constitué par une fente en forme d'entonnoir (72), qui est prévue dans une paroi latérale (70) de la fenêtre d'image (7), des canaux supérieur et inférieur de guidage (74, 75) pour le guidage du diaphragme de fermeture (8), et une autre fente (73), qui est disposée dans une paroi latérale de la fenêtre d'image (7), qui est située en vis-à-vis de la fente en forme d'entonnoir (72), pour le guidage en position finale du diaphragme de fermeture (8).

3. Caméra cinématographique selon la revendication 2, **caractérisée** que le diaphragme de fermeture (8) est constitué par une bande de ressort, qui est guidée dans le dispositif (70 à 75) de guidage du diaphragme.

4. Caméra cinématographique selon la revendication 3, **caractérisée en ce que** la bande de ressort du diaphragme de fermeture (8) est disposée autour d'un tambour (9), qui est relié au dispositif d'entraînement du diaphragme disposé dans une porte (12) de la caméra, qui ferme la caméra intérieure de la caméra cinématographique.
